# EUROPEAN PATENT APPLICATION

(11) **EP 2 261 809 A1**
(43) Date of publication of application: **15.12.2010**
(21) Application number: 10164360.9
(22) Date of filing: 28.05.2010
(51) Int. Cl.: G06F 13/38, H04L 29/06

(54) **Distributed network game system**

(30) Priority: 11.06.2009 US 483025
(71) Applicant: Comcast Cable Communications, LLC, Philadelphia, PA 19103 (US)
(72) Inventor: Cook, Michael, Flemington NJ (US); Poder, James, Cheltenham PA (US)
(74) Representative: Watterson, Peer Marten John

(57) **Abstract**

Methods and systems for providing network-based games to otherwise non-networked devices are provided herein. A network server may provide video game execution and rendering capabilities in accordance with video game software on the server, and may transcode video game output into a media stream for sending to a remotely located media player in use by a user playing the video game. The transcoded media stream is in a format displayable by the media player. The media player may include an expansion card providing wireless network access to the media player for communication with the network gaming server, and may further relay the transcoded media stream received from the network gaming server to the media player, as well as relay user input from a game controller back to the network gaming server. Alternatively, the game controller may communicate directly with the network gaming server.

## Description

### FIELD

This disclosure relates generally to networked computing and computer games. More specifically, the disclosure provides a networked gaming server that generates and sends video streams to remotely located gaming clients, thereby negating the need to generate video at the gaming clients.

### BACKGROUND

Network gaming has dramatically increased in popularity in recent years. Massively multiplayer online games (MMOGs) are commonplace, and often include millions of players in a single game. MMOGs are commonly played using a convention computer, e.g., a desktop computer, or a computer specifically designed for game play and including high-end processing and graphics capabilities. Current generation game consoles also provide sophisticated network gaming abilities whereby users can easily locate others and connect to games being played across a network. However, game consoles and computers designed specifically for gaming are expensive, and often a consumer is precluded from upgrading his or her hardware based on the cost of doing so.

There is an existing installed base of millions of media player devices that do not provides any sort of network gaming capabilities. For example, portable media players such as iPods®, Zunes®, Archos®, Creative Zens®, set top boxes, and other multimedia devices allow a user to listen to music or watch videos, but do not provide network gaming capabilities, and often provide no gaming capabilities at all. In addition, these devices are incompatible with the gaming networks to which current generation game consoles are connected, and do not have integrated networking so they also cannot connect to networked games accessible by conventional computers.

### BRIEF SUMMARY

The following presents a simplified summary in order to provide a basic understanding of some aspects described herein. This summary is not an extensive overview, and is not intended to identify key or critical elements or to delineate the scope of the claims. The following summary merely presents some concepts in a simplified form as a prelude to the more detailed description provided below.

To overcome limitations in the prior art described above, and to overcome other limitations that will be apparent upon reading and understanding the present specification, aspects described herein are directed to a new solution for playing video game and media content on various media players otherwise not-enabled for network-based game play. A network server may provide media server capability, and may transcode media prior to sending the transcoded media to the media player, thereby alleviating the need of the media player to perform video generation, and also alleviating the need for gaming software to be resident on the media player or other device on which the game is rendered or displayed (other than to provide minimal administrative functions).

According to some aspects, when playing a game on a television, the network game server may transcode the gaming display output to H.264 media, which is then sent to a set top box (STB) over an IP network. The STB may run a client application to render or display the gaming media stream to the television. There may be a reverse channel to forward user input commands generated from peripheral devices (e.g., game controllers) to the gaming server. Session management and media streaming may be performed using session initiation protocol (SIP), real-time transport protocol (RTP), and/or real-time streaming protocol (RTSP), or through Digital Living Network Alliance (DLNA) services. Again, in this manner, the STB is not required to run or execute any software specific to a particular video game, but rather acts as a conduit for a pre-rendered video stream.

According to other aspects, an expansion card (e.g., an SD card or PCMCIA CableCard) may act as a gateway for a device to connect to a network gaming server. The expansion card may connect to the network gaming server through a local wireless network and may provide the received transcoded (i.e., pre-rendered) stream to the media player or other device in which the expansion card is inserted. The card may also have a Bluetooth (or other short-range wireless) connection capability to connect to a gaming controller. Commands from the gaming controller may be sent to the expansion card, which may then relay the commands to the game server. Alternatively, where the game controller includes wireless network technology, the game controller may send user input commands to the network game server without routing through the expansion card, whereas the gaming server may still route the transcoded media to the media player through a wireless enabled expansion card while maintaining the session with both the game controller and the expansion card.

For example, a first aspect may include an expansion card that has a microprocessor controlling operations of the expansion card, a wireless networking module for wirelessly connecting to a network, a relay module for relaying a transcoded media stream received from a network gaming server to a device in which the expansion card is seated or with which the expansion card is otherwise associated (e.g., via an adapter or other direct or indirect communication), and control logic configuring the expansion card to maintain a session with the network gaming server, as further described herein.

Another aspect may provide a network gaming server that has a processor controlling operations of the server according to control logic stored at the network gaming sever, a transcoder module for transcoding a media stream into a format displayable by a gaming client device, where the transcoding is based on output from a user-selected video game executing on the network gaming server, and a network interface for communicating with the gaming client device and a game controller. The control logic may configure the network gaming server to receive a session initiation message from the gaming client device, transcode the media stream based on output from the user-selected video game in accordance with received video game user input, send the transcoded media stream to the gaming client device, and repeat the transcoding and sending steps during game play of the user-selected video game.

Still another aspect may provide a method of playing network game media by detecting that an expansion card executing the method has been inserted into a media player, receiving user input indicating a desire to play a networked video game, initiating a session with a network gaming server by sending a session initiation message to the network gaming server via a wireless networking module of the expansion card, and receiving a transcoded media stream from the network gaming server, where the transcoded media stream is in a format renderable or displayable by the media player, and where the media stream provides audio and video output of the video game executing on the network gaming server based on user input provided by a user to the network gaming server. The expansion card may then relay the transcoded media stream to the media player for output via a display and speaker of the media player.

### BRIEF DESCRIPTION OF THE DRAWINGS

A more complete understanding and advantages resulting therefrom may be acquired by referring to the following description in consideration of the accompanying drawings, in which like reference numbers indicate like features, and wherein:

Figure 1 illustrates a network and system architecture that may be used to implement one or more illustrative aspects described herein.

Figure 2 illustrates a system architecture that may be used according to one or more illustrative aspects.

Figure 3 illustrates a method and data flow for establishing a gaming session using SIP according to one or more illustrative aspects.

Figure 4 illustrates a method and data flow for establishing a gaming session using DLNA according to one or more illustrative aspects.

Figure 5 illustrates a system architecture that may be used according to one or more illustrative aspects.

Figure 6 illustrates a method and data flow for establishing a gaming session using the architecture shown in Figure 5.

Figure 7 illustrates a hardware architecture that may be used according to one or more illustrative aspects using an expansion card.

Figure 8 illustrates a method of playing a network-based game according to one or more illustrative aspects described herein.

Figure 9 illustrates a system architecture according to one or more illustrative aspects described herein.

### DETAILED DESCRIPTION

In the following description of the various embodiments, reference is made to the accompanying drawings, which form a part hereof, and in which is shown by way of illustration various embodiments in which aspects may be practiced. It is to be understood that other embodiments may be utilized and structural and functional modifications may be made without departing from the scope of the present disclosure.

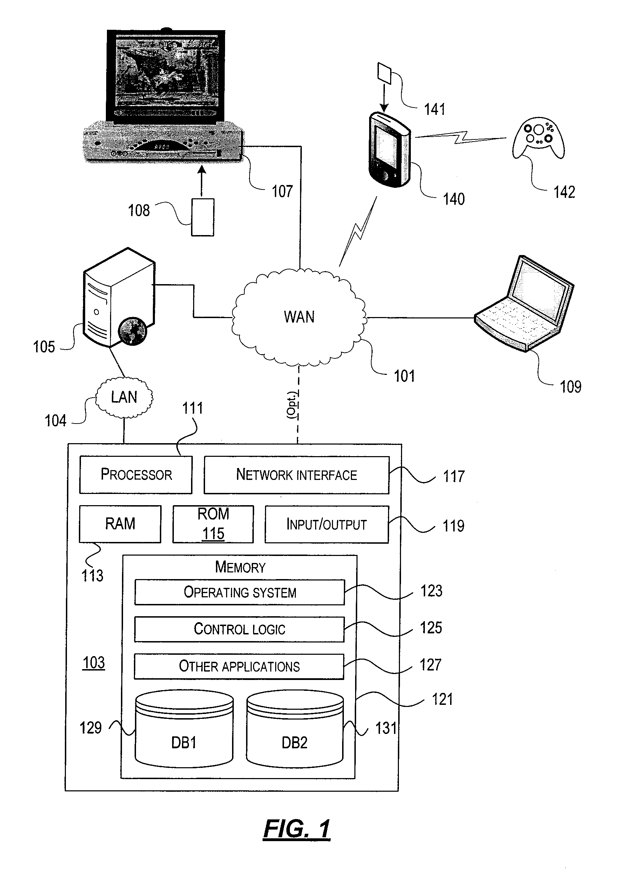

FIG. 1 illustrates one example of a network architecture and data processing device that may be used to implement one or more illustrative aspects. Various network nodes 103, 105, 107, 109, and 140 may be interconnected via a wide area network (WAN) 101, such as the Internet, a cable distribution network, or the like. Other networks may also or alternatively be used, including private intranets, corporate networks, LANs, wireless networks, personal networks (PAN), etc. Network 101 is for illustration purposes and may be replaced with fewer or additional computer networks. A local area network (LAN) such as LAN 104 may have one or more of any known LAN topology and may use one or more of a variety of different protocols, such as Ethernet. Devices 103, 105, 107, 109, 140 and other devices (not shown) may be connected to one or more of the networks via twisted pair wires, coaxial cable, fiber optics, radio waves, infrared, or other communication media.

The term "network" as used herein and depicted in the drawings refers not only to systems in which remote storage devices are coupled together via one or more communication paths, but also to stand-alone devices that may be coupled, from time to time, to such systems that have storage capability. Consequently, the term "network" includes not only a "physical network" but also a "content network," which is comprised of the data-attributable to an entity-which resides across all physical networks.

The components may include data server 103, web server 105, and client devices 107, 109, 140. Data server 103 provides overall access, control and administration of databases and control software for performing one or more illustrative aspects as described herein. Data server 103 may be connected to web server 105 through which users interact with and obtain data as requested. Alternatively, data server 103 may act as a user-accessible server itself and be directly connected to the WAN 101. Data server 103 may be connected to web server 105 through the network 101 (e.g., the Internet), via direct or indirect connection, or via some other network, e.g., a LAN. Users may interact with the data server 103 using remote devices 107, 109, 140, e.g., using a web browser to connect to the data server 103 via one or more externally exposed web sites hosted by web server 105. Client devices 107, 109, 140 may be used in concert with data server 103 to access data stored therein, or may be used for other purposes. For example, from client device 109 a user may access web server 105 using an Internet browser, as is known in the art, or by executing a software application that communicates with web server 105 and/or data server 103 over a computer network (such as the Internet).

Servers and applications may be combined on the same physical machines, and retain separate virtual or logical addresses, or may reside on separate physical machines. FIG. 1 illustrates just one example of a network architecture that may be used, and those of skill in the art will appreciate that the specific network architecture and data processing devices used may vary, and are secondary to the functionality that they provide, as further described herein. For example, services provided by web server 105 and data server 103 may be combined on a single server.

Each component 103, 105, 107, 109, 140 may be any type of known computer, server, or other data processing device. Data server 103, e.g., may include a processor 111 controlling overall operation of the data server 103. Data server 103 may further include RAM 113, ROM 115, network interface 117, input/output interfaces 119 (e.g., keyboard, mouse, display, printer, etc.), and memory 121. I/O 119 may include a variety of interface units and drives for reading, writing, displaying, and/or printing data or files. Memory 121 may further store operating system software 123 for controlling overall operation of the data processing device 103, control logic 125 for instructing data server 103 to perform aspects as described herein, and other application software 127 providing secondary, support, and/or other functionality which may or may not be used in conjunction with various aspects described herein. The control logic may also be referred to herein as the data server software 125. Functionality of the data server software may refer to operations or decisions made automatically based on rules coded into the control logic, made manually by a user providing input into the system, and/or a combination of automatic processing based on user input (e.g., queries, data updates, etc.).

Memory 121 may also store data used in performance of one or more aspects of the disclosure, including a first database 129 and a second database 131. In some embodiments, the first database may include the second database (e.g., as a separate table, report, etc.). That is, the information can be stored in a single database, or separated into different logical, virtual, or physical databases, depending on system design. Devices 105, 107, 109, 140 may have similar or different architecture as described with respect to device 103. Those of skill in the art will appreciate that the functionality of data processing device 103 (or device 105, 107, 109, or 140) as described herein may be spread across multiple data processing devices, for example, to distribute processing load across multiple computers, to segregate transactions based on geographic location, user access level, quality of service (QoS), etc.

One or more aspects of the disclosure may be embodied in computer-usable or readable data and/or computer-executable instructions, such as in one or more program modules, executed by one or more computers or other devices as described herein. Generally, program modules include routines, programs, objects, components, data structures, etc. that perform particular tasks or implement particular abstract data types when executed by a processor in a computer or other device. The modules may be written in a source code programming language that is subsequently compiled for execution, or may be written in a scripting language such as (but not limited to) HTML or XML. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects, and such data structures are contemplated within the scope of computer executable instructions and computer-usable data described herein.

As shown in FIG. 1, one or more client devices may include a portable device 140, e.g., a portable media player, smartphone, handheld internet browser, ultra-mobile PC, or the like. Portable device 140 may be configured to receive an expansion card 141 providing functionality according to one or more aspects as described herein. Expansion card 141 may include, e.g., CompactFlash Type I, CompactFlash Type II, SD SecureDigital Card, SDHC, miniSD, MultiMediaCard, RS-MMC, Memory Stick, Memory Stick PRO, Memory Stick Duo, Memory Stick PRO Duo, SmartMedia, xD-PictureCard, xD-PictureCard Type M, or other expansion cards now known or later developed. Portable device 140 may communicate wirelessly with game controller 142, as further explained below.

Client device 107 may include a cable decoder as part of a set top box or integrated into a television set. Decoder 107 may be configured to receive a PCMCIA CableCARD 108 providing functionality according to one or more aspects as described herein. Other system architectures may be used, based on the following description of various aspects described herein. For example, where WAN 101 comprises a cable distribution system, server 103 may represent or include functionality performed by a cable headend system.

Aspects described herein provide systems and methods of playing video game media content on various media players and devices by using a network gaming server that generates the audio and video for the video game. As used herein, a video game refers to any interactive entertainment, including but not limited to computer games, arcade games, casual games, video slot machines, and the like.

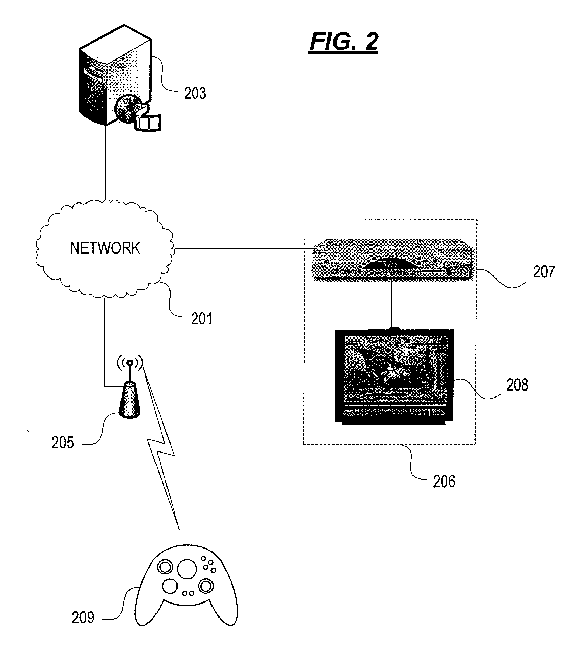

With reference to FIG. 2, an embodiment may include a game server 203 (e.g., similar to server 103), network 201 (e.g., Internet, cable distribution system, fiber optic network, or a combination), decoder 207 (e.g., a set top box, STB), television 208, wireless access point 205, and game controller 209. Wireless access point and decoder 207 may alternatively be on the same LAN. Game controller 209 may communicate with decoder 207, which then forwards game input back to gaming server 203, or game controller 209 may alternatively communicate directly with gaming server 203 via wireless access point 205. Decoder 207 may alternatively be integrated within TV 208 to form integrated device 206. In another alternative, decoder 207 and TV 208 may be integrated within other types of devices, e.g., as a digital media player or digital media recorder having both audio and video capabilities. For example, a digital media player may provide integrated audiovisual capabilities, as well as user input controls provided by game controller 209. In one or more arrangements, game controller 209 may include its own internal wireless access point.

Decoder 207, server 203, and other applicable components may provide support for Digital Living Network Alliance (DLNA) protocols and specifications. Session initiation protocol (SIP), real-time transport protocol (RTP), and/or real-time streaming protocol (RTSP) may also or alternatively be used.

When a user desires to play a game on TV 208, decoder 207 may initiate a game session using DLNA or SIP responsive to user input requesting a particular game. Game server 203 may transcode the video game output (i.e., audio and video) into H.264 media, and send the media to decoder/STB 207 for display on TV 208. Decoder 207 may execute a client application to display the gaming media stream on the TV or other display device. Game controller 209 may communicate user commands back to server 203 via a reverse channel through wireless access point 205 and network 201. Server 203 then processes the received commands in accordance with the game being played, and generates responsive video for transmission to decoder 207.

Using the architecture shown in FIG. 2 alleviates the need for decoder 207 or any other local device to store software specific to a particular game. Rather, video game software is stored at and executed by gaming server 203, which pre-renders the video game output and sends the media stream to decoder 207 for display on a locally attached display device 208. Less hardware is therefore necessary at the consumer location than previously necessary. In addition, the hardware that is required at the consumer location is less costly, e.g., a game controller as opposed to an entire game console or PC.

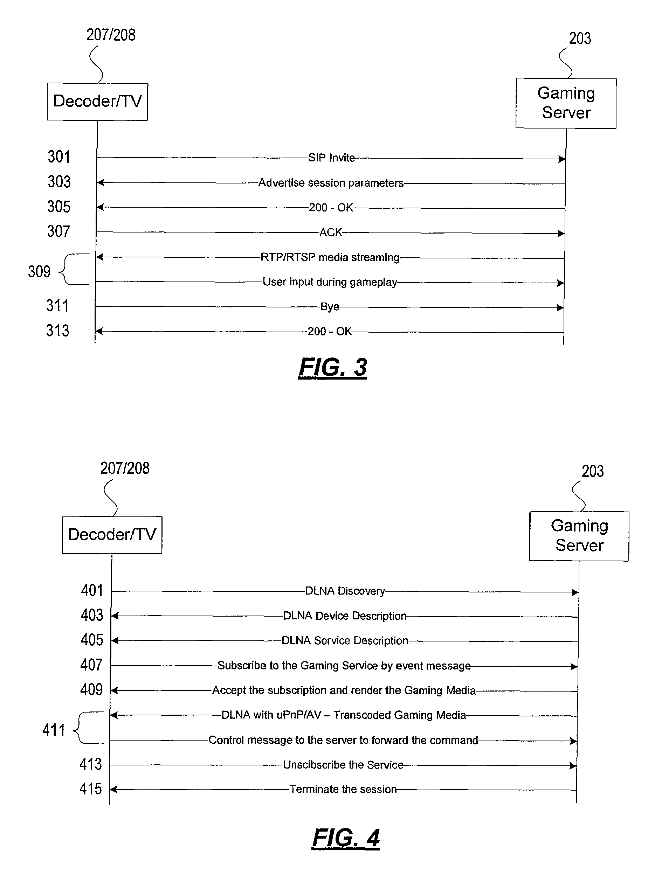

FIG. 3 illustrates a method and data flow for playing a game in accordance with the architecture shown in FIG. 2, using session initiation protocol (SIP). In step 301 a user provides input, e.g., via game controller 209, to initiate a game session, and decoder 207 sends a SIP Invite command to gaming server 203. In step 303 gaming server 203 responds with a message in which gaming server 203 provides the session parameters, e.g., server port ID, reverse channel port ID, etc., as required by SIP. Gaming server 203 in step 305 provides SIP OK message (200) acknowledging the SIP invite message received from step 301. Decoder 207 in step 307 sends an ACK message back to the gaming server, at which time the game is initiated.

During gameplay, in step 309, gaming server 203 provides a transcoded video stream to decoder/TV 207/208 in a format directly usable by decoder/TV 207/208, i.e., a format that may be output directly to the display without further processing. Also in step 309 a user is providing user input to game controller 209 based on the audio and video information presented on TV 208, and game controller 209 forwards the user input to gaming server 203 via the previously established reverse channel. That is, the game controller may route commands via a wireless connection with a wireless access point, as shown, or may route commands via a wireless connection with decoder 207 (not shown).

When the game is over, or when the user decides he or she is done playing the game, the user provides input to game controller 209 or decoder 207 to stop game play, and decoder 207 in step 311 sends a BYE message to gaming server 203. In step 313, gaming server ceases operation of the game, and sends an SIP OK message (200) back to the decoder to indicate that the game play session has ended, and the decoder then resumes other operations as desired.

FIG. 4 illustrates a method and data flow for playing a game in accordance with the architecture shown in FIG. 2, using Digital Living Network Alliance (DLNA) protocols. In step 401 the decoder 207 sends a DLNA discovery request to gaming server 203, in response to which the gaming server 203 sends a DLNA device description message back to decoder 207 in step 403. Gaming server 203 also sends a DLNA service description message to decoder 207 in steps 405. The service description message may include advertising of session parameters, server port ID, reverse channel port ID, etc. In step 407 the decoder 207 subscribes to the gaming service by sending an event message to gaming server 203, and in step 409 the gaming server accepts the subscription and begins rendering and transcoding the gaming media.

During gameplay, in step 411, gaming server 203 provides the transcoded video stream to decoder/TV 207/208 in a format directly usable by decoder/TV 207/208, i.e., a format that may be output directly to the display without further processing. Also in step 411 a user is providing user input via game controller 209 based on the audio and video information presented on TV 208, and game controller 209 or decoder 207 forwards the user input to gaming server 203 via the previously established reverse channel. That is, the game controller may route commands via a wireless connection with a wireless access point, as shown, or may route commands via a wireless connection with decoder 207 (not shown).

In step 413, when the game ends or the user decides to cease playing, the decoder 207 sends an unsubscribe message to gaming server 203, and in step 415 the gaming server 203 terminates the game session, at which time the decoder resumes other operations.

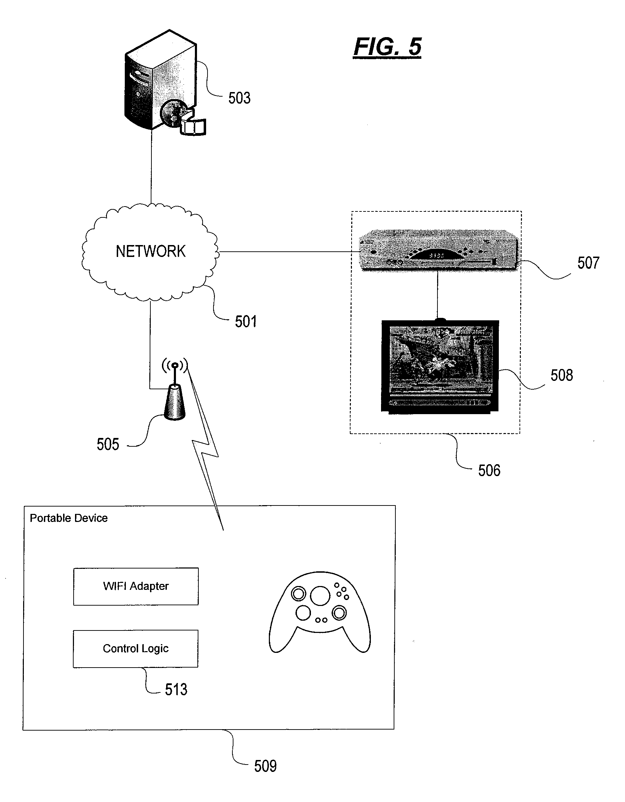

With reference to FIG. 5, an embodiment may include a game server 503 (e.g., similar to server 103), network 501 (e.g., Internet, cable distribution system, fiber optic network, or combination), decoder 507, television 508, wireless access point 505, and portable device 509. Decoder 507 may alternatively be integrated within TV 508 as integrated device 206. Portable device 509, server 503, and other applicable components may provide support for Digital Living Network Alliance (DLNA) protocols and specification. Session initiation protocol (SIP), real-time transport protocol (RTP), and/or real-time streaming protocol (RTSP) may also or alternatively be used. As illustrated in FIG. 5, portable device 509 may include game controller functionality, e.g., via one or more user inputs, buttons, sliders, joysticks, etc.

When a user desires to play a game on TV 508, control logic 513 may initiate a game session using DLNA or SIP responsive to user input requesting a particular game. Game server 503 may transcode the video game output (i.e., audio and video) into H.264 media, and send the media to decoder/STB 507 for display on TV 508. Decoder 507 may execute a client application to display the gaming media stream. Portable device 509 may communicate user commands back to server 503 via a reverse channel through wireless access point 505 and network 501. Server 503 then processes the received commands in accordance with the game being played, and generates responsive video for transmission to decoder 507.

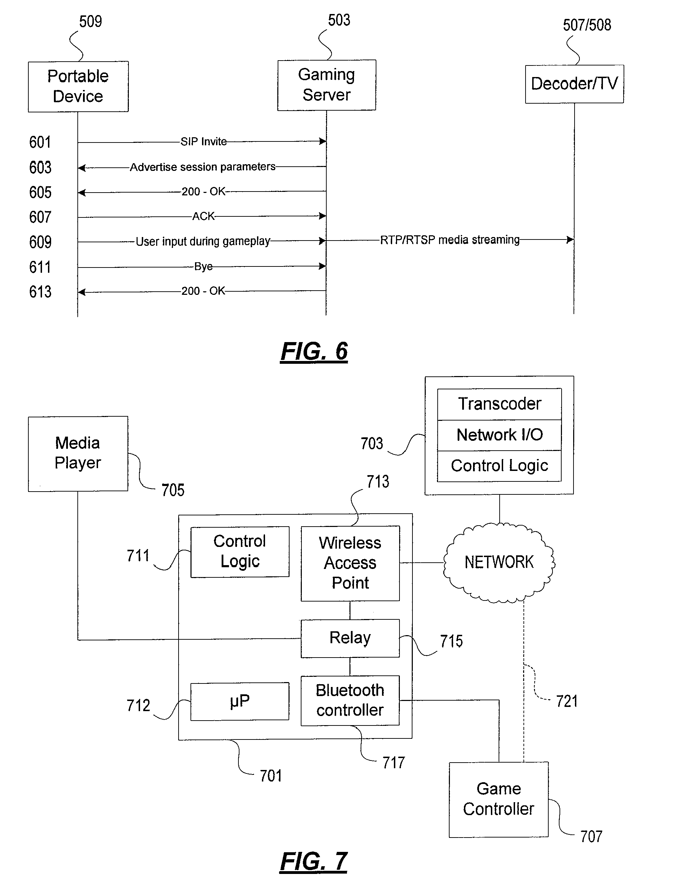

FIG. 6 illustrates a method and data flow for playing a game in accordance with the architecture shown in FIG. 5, using session initiation protocol (SIP). In step 601 portable device 509, under control of control logic 513, receives user input to initiate a game session, and sends a SIP Invite command to gaming server 503. In step 603 gaming server 503 responds with a message in which gaming server 503 provides the session parameters, e.g., server port ID, reverse channel port ID, etc., as required by SIP. Gaming server 503 in step 605 provides SIP OK message (200) acknowledging the SIP invite message from step 601. Portable device 509 in step 607 sends an ACK message back to the gaming server, at which time the game is initiated.

During gameplay, in step 609, gaming server 503 provides a transcoded video stream to decoder/TV 507/508 in a format directly usable by decoder/TV 507/508, i.e., may be output directly to the display without further processing. Also in step 609 a user is providing user input to portable device 509 based on the audio and video information presented on TV 508, and portable device 509 forwards the user input to gaming server 503 via the previously established reverse channel.

When the game is over, or when the user decides he or she is done playing the game, the user provides input to portable device to stop game play, and portable device 509 in step 611 sends a BYE message to gaming server 503. In step 613, gaming server 503 ceases operation of the game, and sends an SIP OK message (200) back to the portable device 509 to indicate that the game play session has ended.

According to one aspect, with reference to FIG. 7, functions and services necessary to communicate with the game server (e.g., with game server 103) may be provided by a computer memory, microprocessor, or application specific integrated circuit within an expansion card 701, which may be similar to expansion card 108 or 141 (FIG. 1). Card 701 may include control logic 711 for controlling card 701 as described herein when processed by microprocessor 712. For example, control logic may define an address of the network gaming server, or may provide instructions regarding how to learn the address of the network gaming server. Control logic 711 may also serve as an intermediation device providing setup and teardown of sessions as well as ongoing events between the player and the media server.

Card 701 may further include a wireless access point 713, command relay 715, and Bluetooth controller 717 (controller 717 may alternatively be replaced with any suitable short-range wireless communications controller). Card 701 may be in communication with gaming server 703, media player 705, and optionally also in communication with game controller 707 when media player 705 does not provide the required user inputs or game controls. Stated differently, game controller 707 may be integrated within media player 705.

Card 701 acts as a gateway to gaming server 703 for devices that are not otherwise equipped to communicate with server 703, and card 701 may be used to make older devices compatible with gaming server 703 provided the older device has an expansion card slot of the same format as card 701 (e.g., and older media player may have an SD Card slot, and expansion card 701 may be an SD Card).

Wifi access point 713 allows card 701 to communicate with gaming server 703 via a local wireless network, e.g., using 802.11 or later developed protocols and schemas. Card 701 may use the wifi connection to forward user input commands to game server 703 via the reverse channel, and may also receive the transcoded media from gaming server 703 over the wifi connection.

Bluetooth controller 717 may be used to communicate with game controller 707, e.g., to receive user inputs during game play responsive to the transcoded media output by media player 705. Card 701 may relay the user inputs top gaming server 703 via the relay module 715. Card 701 may also relay the transcoded media received from gaming server 703 to media player 705 via relay module 715. Alternatively, the functionality of relay module 715 may be included within control logic 711.

In an alternative embodiment, shown by optional connection 721, game controller 707 may have integrated wireless capability and be in communication with game server 703 without relaying through card 701. The game server 703 maintains a session between itself, the game controller 707, and card 701. Card 701 still provides SIP or DLNA support as needed, and attendant media rendering/displaying capabilities. The gaming server 703 transcodes the gameplay video and sends the transcoded stream to the card 701 for display on media player 705. Game controller 707 sends user commands directly to the gaming server 703 via the wireless connection. The gaming server 703 provides session management.

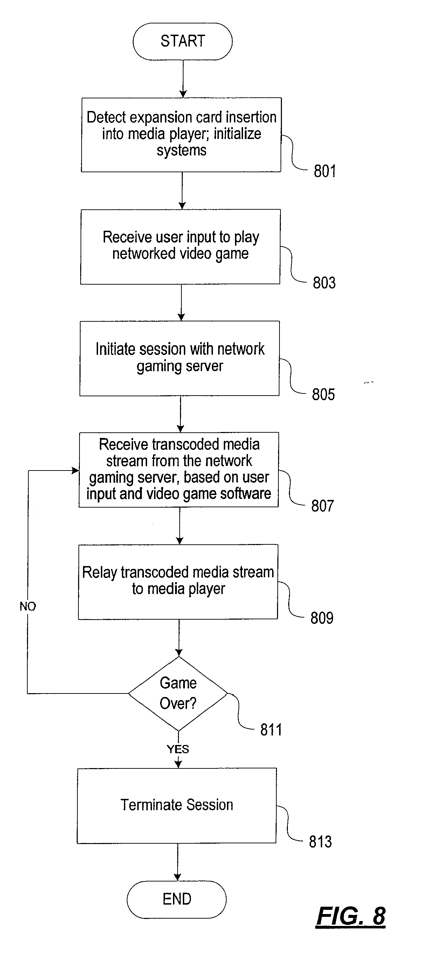

FIG. 8 illustrates a method of playing network game media according to one or more illustrative aspects based on the architecture illustrated in FIG. 7. In step 801, the expansion card is activated when inserted into a compatible receiving device, e.g., in a media player or set top box. The expansion card initializes the various modules and establishes communications with external devices, if available, e.g., with the game controller and wireless access point. In step 803, the expansion card receives user input indicating a desire of the user to play a networked game. The user input may be received from the game controller or from the media player, based on which of the two is providing user input and game controller functionality.

In step 805 the expansion card initiates a game session with the network gaming server, e.g., by sending a SIP or DLNA session initiation message to the network gaming server. Transmission and/or receipt of additional messages may be required, e.g., ACK messages and other handshaking messages, as defined by the specific protocol in use.

Once the session is established, in step 807 the expansion card begins receiving a media stream transcoded by the network gaming server in a format renderable by the device with which the expansion card is associated, e.g., in H.264 format. The media stream represents the audio and video output of the video game executing on the network gaming server based on user input provided by the user and relayed to the network gaming server by the expansion card (or sent independently to the network gaming server, according to some embodiments described herein). That is, user input is sent from the game controller (or media player device) to the network gaming server executing the video game. The network gaming server, based on the video game software, interprets the user input according to the video game software, e.g., to cause a character to run, jump, fight, etc., and modifies the media stream accordingly.

In step 809 the expansion card relays the transcoded media stream to the device with which the card is associated for output via a display and speaker(s) of the device. In step 81 the expansion card determines if the game is over and, if so, terminates the session in step 813. If the game is not over, the expansion card continues to receive and relay the transcoded media stream according to the user input.

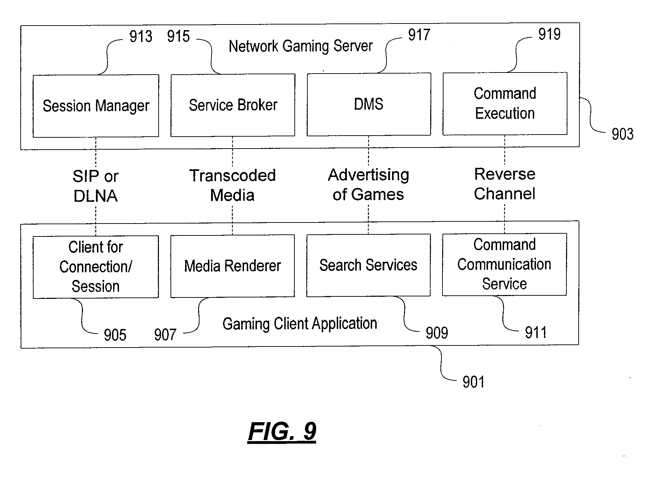

FIG. 9 illustrates a sample system architecture that may be used, regardless of whether the gaming services are provided by a decoder, an expansion card, or some other module or node. FIG. 9 illustrates sample components in a gaming client application 901 (regardless of hardware used) and the communicatively corresponding components in network gaming server 903. Gaming client application 901 includes a session client 905 for managing the gaming connection or session, a media renderer 907 for receiving the transcoded media and forwarding it to the appropriate hardware for display, search services 909 to search for DLNA or otherwise advertised games, and command communication service 911 to receive user input from the game controller and forward the user commands back to the network gaming server 903 over the reverse channel.

Network gaming server 903 may include a session manager 913 for managing sessions with one or more gaming client applications; service broker 915 to render the media output and send the transcoded media stream to the gaming client application 901; digital media server (DMS) 917 to advertise available games or other media; and command execution module 919, which receives the user input from the reverse channel and inputs the user commands to the game for further execution.

The components of gaming client application 901 and/or network gaming server may be included within a single piece of hardware, or may be spread out among multiple pieces of hardware. For example, a media player may include modules 905, 907, 909, whereas a separate game controller may include command communication server 911. Other modifications may also be made based on the specific implementation hardware used.

The above embodiments may be used to provide gaming capabilities on otherwise non-networked devices, provided the device has an expansion slot of a suitable format. For example, in an embodiment where the expansion card is a PCMCIA CableCard, high-resolution network gaming capabilities may be added to millions of preexisting set top boxes already in users' homes simply by inserting the expansion card described herein to each set top box. In addition, aspects described above may be used to provide more than just gaming entertainment. Indeed, aspects described herein may be used to provide any sort of interactive media content, including interactive movies or videos, choose-your-own-adventure style games or books, television shows, movies, and the like.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

### Features

1. An expansion card comprising:
   a microprocessor configured to control operations of the expansion card; a wireless networking module configured to wirelessly connect to a network; a relay module configured to relay a transcoded media stream received from a network gaming server to a device with which the expansion card is associated; and
   control logic configuring the expansion card to maintain a session with the network gaming server.
2. The expansion card of feature 1, further comprising a short-range wireless communication module configured to communicate with a game controller, and wherein the relay module is configured to relay user input commands received from the game controller to the network gaming server via the wireless networking module.
3. The expansion card of feature 1 or feature 2, comprising a Secure Digital(SD) Card.
4. The expansion card of feature 1 or feature 2, comprising a Personal Computer Memory Card International Association (PCMCIA) CableCard.
5. A network gaming server comprising:
   a processor configured to control operations of the server according to control logic stored at the gaming sever;
   a transcoder module configured to transcode a media stream into a format displayable by a gaming client device, based on output from a user-selected video game executing on the network gaming server; and
   a network interface configured to communicate with the gaming client device and a game controller;
      said control logic, when executed by the processor, configuring the network gaming server to perform:
   receiving a session initiation message from the gaming client device;
   transcoding the media stream based on output from the user-selected video game in accordance with received video game user input;
   sending the transcoded media stream to the gaming client device; and
   repeating the transcoding and sending steps during game play of the user-selected video game.
6. The network gaming server of feature 5, wherein the gaming client device is an expansion card.
7. The network gaming server of feature 6, wherein the expansion card is an SD Card.
8. The network gaming server of feature 6, wherein the expansion card is a PCMCIA CableCard.
9. The network gaming server of any of features 5 to 8, wherein the received video game input is received from a game controller communicating through the gaming client device.
10. The network gaming server of any of features 5 to 9, wherein the received video game input is received from a game controller communicating independently of the gaming client device.
11. A method of playing network game media, comprising steps of:
   detecting that an expansion card executing the method has been inserted into a media player;
   receiving user input indicating a desire to play a networked video game;
   initiating a session with a network gaming server by sending a session initiation message to the network gaming server via a wireless networking module of the expansion card;
   receiving a transcoded media stream from the network gaming server, wherein the transcoded media stream is in a format displayable by the media player, and wherein the media stream provides audio and video output of the video game executing on the network gaming server based on user input provided by a user to the network gaming server; and
   relaying the transcoded media stream to the media player for output via the media player.
12. The method of feature 11, further comprising:
   receiving, via a short-range wireless communication module, user input from a game controller; and
   relaying the user input to the network gaming server for further processing in accordance with the video game executing on the network gaming server.
13. The method of feature 12, wherein relaying the user input is over a reverse channel established between the expansion card and the network gaming server.
14. The method of feature 12 or feature 13, wherein the expansion card is an SD Card.
15. The method of feature 12 or feature 13, wherein the expansion card is a PCMCIA CableCard.
16. The method of any of features 12 to 15, wherein the transcoded media stream is in H.264 format.
17. The method of any of features 12 to 16, wherein the session initiation message conforms to one of session initiation protocol (SIP) and digital living network alliance (DLNA).
18. A system comprising: an expansion card comprising:
   a microprocessor configured to control operations of the expansion card;
   a wireless networking module configured to wirelessly connect to a network;
   a short-range wireless communication module configured to communicate with a game controller;
   a relay module configured to relay a transcoded media stream received from a network gaming server to a device with which the expansion card is associated, and configured to relay commands received from the game controller to the network gaming server;
   control logic configuring the expansion card to maintain a session with the network gaming server, and
   the game controller comprising a plurality of user inputs for interacting with a video game executing on the network gaming server.
19. The system of feature 18, wherein the expansion card is an SD Card.
20. The system of feature 18 or feature 19, wherein the expansion card is a card adapted for insertion in a set top box.

## Claims

1. An expansion card comprising:
a microprocessor configured to control operations of the expansion card; a wireless networking module configured to wirelessly connect to a network; a relay module configured to relay a transcoded media stream received from a network gaming server to a device with which the expansion card is associated; and
control logic configuring the expansion card to maintain a session with the network gaming server.

2. The expansion card of claim 1, further comprising a short-range wireless communication module configured to communicate with a game controller, and wherein the relay module is configured to relay user input commands received from the game controller to the network gaming server via the wireless networking module.

3. The expansion card of claim 1 or claim 2, comprising a Secure Digital(SD) Card or a Personal Computer Memory Card International Association (PCMCIA) CableCard.

4. A network gaming server comprising:
a processor configured to control operations of the server according to control logic stored at the gaming sever;
a transcoder module configured to transcode a media stream into a format displayable by a gaming client device, based on output from a user-selected video game executing on the network gaming server; and
a network interface configured to communicate with the gaming client device and a game controller;
said control logic, when executed by the processor, configuring the network gaming server to perform:
receiving a session initiation message from the gaming client device;
transcoding the media stream based on output from the user-selected video game in accordance with received video game user input;
sending the transcoded media stream to the gaming client device; and
repeating the transcoding and sending steps during game play of the user-selected video game.

5. The network gaming server of claim 5, wherein the gaming client device is an expansion card, preferably the expansion card is an SD Card or a PCMCIA CableCard.

6. The network gaming server of claim 4, wherein the received video game input is received from a game controller communicating through the gaming client device.

7. The network gaming server of any of claims 4 to 6, wherein the received video game input is received from a game controller communicating independently of the gaming client device.

8. A method of playing network game media, comprising steps of:
detecting that an expansion card executing the method has been inserted into a media player;
receiving user input indicating a desire to play a networked video game;
initiating a session with a network gaming server by sending a session initiation message to the network gaming server via a wireless networking module of the expansion card;
receiving a transcoded media stream from the network gaming server, wherein the transcoded media stream is in a format displayable by the media player, and wherein the media stream provides audio and video output of the video game executing on the network gaming server based on user input provided by a user to the network gaming server; and
relaying the transcoded media stream to the media player for output via the media player.

9. The method of claim 8, further comprising:
receiving, via a short-range wireless communication module, user input from a game controller; and
relaying the user input to the network gaming server for further processing in accordance with the video game executing on the network gaming server.

10. The method of claim 9, wherein relaying the user input is over a reverse channel established between the expansion card and the network gaming server.

11. The method of claim 9 or claim 10, wherein the expansion card is an SD Card or a PCMCIA CableCard.

12. The method of any of claims 9 to 11, wherein the transcoded media stream is in H.264 format.

13. The method of any of claims 9 to 12, wherein the session initiation message conforms to one of session initiation protocol (SIP) and digital living network alliance (DLNA).

14. A system comprising: an expansion card comprising:
a microprocessor configured to control operations of the expansion card;
a wireless networking module configured to wirelessly connect to a network;
a short-range wireless communication module configured to communicate with a game controller;
a relay module configured to relay a transcoded media stream received from a network gaming server to a device with which the expansion card is associated, and configured to relay commands received from the game controller to the network gaming server;
control logic configuring the expansion card to maintain a session with the network gaming server, and
the game controller comprising a plurality of user inputs for interacting with a video game executing on the network gaming server.

15. The system of claim 14, wherein the expansion card is an SD Card, wherein the expansion card may be a card adapted for insertion in a set top box.
